# EUROPEAN PATENT APPLICATION

(11) **EP 4 152 757 A1**
(43) Date of publication of application: **22.03.2023**
(21) Application number: 21821946.7
(22) Date of filing: 27.05.2021
(51) Int. Cl.: H04N 21/431

(54) **VIDEO PLAYBACK METHOD AND APPARATUS, STORAGE MEDIUM, AND ELECTRONIC DEVICE**

(30) Priority: 10.06.2020 CN 202010524954
(71) Applicant: BEIJING BYTEDANCE NETWORK TECHNOLOGY CO., LTD., Beijing 100041 (CN)
(72) Inventor: DENG, Zhuoyao, Beijing 100190 (CN)
(74) Representative: Dentons UK and Middle East LLP
(86) International application number: PCT/CN2021/096376
(87) International publication number: WO 2021/249196

(57) **Abstract**

The present disclosure relates to a video playback method and apparatus, a storage medium, and an electronic device. The method comprises: receiving a video playback request, the video playback request comprising first video information, and the video playback request instructing to playback video data corresponding to the first video information by means of a target page; acquiring second video information corresponding to a video preview page, the video preview page being used to playback video data corresponding to the second video information; and when the first video information and the second video information are the same, performing video playback on the target page on the basis of video playback progress information corresponding to the video preview page and video data loaded on the video preview page. Therefore, the transmission amount of video data can be effectively reduced, and the request response time of the video data and the waiting time of video playback can be shortened. In addition, the playback progress of a preview video in a video preview page and the video playback progress of a target page can be ensured to be continuous, guaranteeing the consistency of video playback.

## Description

The present disclosure claims priority of Chinese Patent Application No. 202010524954.8, titled "VIDEO PLAYBACK METHOD AND APPARATUS, STORAGE MEDIUM, AND ELECTRONIC DEVICE", filed with the China National Intellectual Property Administration on June 10, 2020, which is incorporated herein by reference in its entirety.

### TECHNICAL FIELD

The present disclosure relates to the field of computer technology, in particular to a video playing method and apparatus, a storage medium and an electronic device.

### BACKGROUND

With the development of computer technology, a variety of applications (APPs) provide a window preview function for the easy operation of a use. For example, at present, a live streaming preview page in a live room, a follow-me page, and a personal video page and the like are all are provided with the live preview function. However, in the conventional technology, when a play page of a live room is accessed through a preview page, it is usually necessary to wait for pulling the stream and loading a video of a live room, which results in a long waiting time for video rendering, and a inconsecutive play of the videos played in the preview page and the live room.

### SUMMARY

The section of Summary is provided to introduce concepts in a simplified form that are described in detail in the section of Detailed Description of Embodiments that follows. The section of Summary is not intended to identify key features or essential features of the claimed technical solution, and nor intended to limit the scope of the claimed technical solution.

In a first aspect, a video playing method is provided according to the present disclosure. The method includes:
receiving a video playing request, where the video playing request includes first video information, and the video playing request indicates to play video data corresponding to the first video information through a target page;
acquiring second video information corresponding to a video preview page, where the video preview page is used to play video data corresponding to the second video information; and
playing a video in the target page based on video playing progress information corresponding to the video preview page and video data loaded on the video preview page, in response to the first video information being the same as the second video information.

In a second aspect, a video playing apparatus is provided according to the present disclosure. The apparatus includes: a receiving module, a first acquisition module and a first playing module.

The receiving module is configured to receive a video playing request, where the video playing request includes first video information, and the video playing request indicates to play video data corresponding to the first video information through a target page.

The first acquisition module is configured to acquire second video information corresponding to a video preview page, where the video preview page is used to play video data corresponding to the second video information.

The first playing module is configured to play a video in the target page based on video playing progress information corresponding to the video preview page and video data loaded on the video preview page, in response to the first video information being the same as the second video information.

In a third aspect, a computer readable medium storing a computer program is provided according to the present disclosure. The program, when executed by a processing apparatus, performs steps of the method according to the first aspect.

In a fourth aspect, an electronic device is provided. The electronic device includes:
a storage apparatus storing a computer program, and
a processing apparatus configured to execute the computer program stored in the storage apparatus to perform steps of the method according to the first aspect.

In the above technical solution, the video playing request is received, and the video playing request includes the first video information. Moreover, the second video information corresponding to the video preview page is acquired. Therefore, when the first video information is the same as the second video information, the video may be played in the target page based on the video playing progress information corresponding to the preview page and the video data loaded on the video preview page. With the above technical solution, when the video played on the video preview page is the same as the video played on the video page to be watched by the user, the video may be played directly based on the video data and the video playing progress information of the video preview page. On the one hand, when being played on the target page, the video may be played directly based on the video data loaded by the video preview interface without reacquiring the video data. Thus, less communication resource is occupied, and the page response speed and video playing fluency can be effectively improved. On the other hand, the video may be played in the target page based on the video playing progress information of the video preview page. Thus, for the same video, the playing progress of the video preview page is consecutive with that of the target page, effectively solving the problem of video discontinuity when switching from the preview page to the play page in the conventional technology, and improving the user experience.

Other features and advantages of the present disclosure are described in detail in the section of Detailed Description of Embodiments that follows.

### BRIEF DESCRIPTION OF THE DRAWINGS

The above and other features, advantages and aspects of the embodiments of the present disclosure will be more apparent in conjunction with the drawings and with reference to the following embodiments. The same or similar reference numerals throughout the drawings represent the same or similar elements. It should be understood that the drawings are schematic and the components and elements are unnecessarily drawn to scale. In the drawings:
Figure 1 is a flowchart of a video playing method according to an embodiment of the present disclosure;
Figure 2 is a schematic diagram of a video preview page;
Figure 3 is a flowchart of an exemplary implementation of playing video data corresponding to a video preview page on the video preview page based on a pull-stream component and a video address in the video preview page;
Figure 4 is a block diagram of a video playing apparatus according to an embodiment of the present disclosure; and
Figure 5 is a structural diagram of an electronic device according to an embodiment of the present disclosure.

### DETAILED DESCRIPTION OF EMBODIMENTS

Embodiments of the present disclosure are described in detail below with reference to the drawings. Although some embodiments of the present disclosure are shown in the drawings, it should be understood that the present disclosure may be implemented in various forms and should not be limited to the embodiments. The embodiments are provided for thoroughly and completely understanding the present disclosure. It should be understood that the drawings and the embodiments of the present disclosure are exemplary and are not intended to limit the protection scope of the present disclosure.

It should be understood that the steps in the method embodiment of the present disclosure may be performed in different orders and/or in parallel. In addition, the method embodiment may include an additional step and/or an omitted step that is not shown herein. The scope of the present disclosure is not limited in this aspect.

The term "include" and its variations in the present disclosure means open-ended inclusion, that is, "including but not limited to". The term "based on" means "based at least in part on". The term "one embodiment" means "at least one embodiment". The term "another embodiment" means "at least one additional embodiment". The term "some embodiments" means "at least some embodiments". The definitions of other terms are provided in the following descriptions.

It should be noted that the concepts such as "first" and "second" mentioned in the present disclosure are used to distinguish different devices, modules or units, and are not used to limit an sequential order or interdependence of the functions performed by the devices, modules or units.

It should be noted that the modifications such as "one" and "multiple" mentioned in the present disclosure are illustrative and not restrictive. Those skilled in the art should understand that the modifications should be understood as "one or more" unless otherwise expressly indicated in the context.

Names of messages or information exchanged between multiple apparatuses in the embodiments of the present disclosure are only for illustrative purposes, and are not intended to limit the scope of the messages or information.

As described in the background technology, at present, the video discontinuity usually occurs when a play page is accessed from a preview page during the video playing. The applicant found through research that in the conventional technology, when the play page is accessed from the preview page, the video of the preview page is paused and the video data of the play page is acquired by re-pulling streams, so as to play the video in the play page, which results in the video playing discontinuity in a switch process from the preview page to the play page. Based on this, the applicant provides the following technical solutions to solve the above problem.

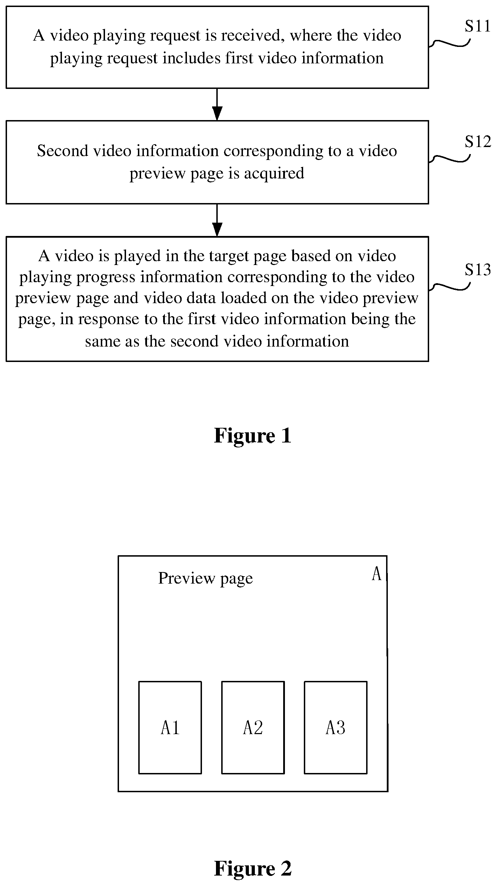

Figure 1 is a flowchart of a video playing method according to an embodiment of the present disclosure. As shown in Figure 1, the method includes steps S11 to S13.

In S11, a video playing request is received, where the video playing request includes first video information. The video playing request indicates to play video data corresponding to the first video information through a target page. The first video information is used to acquire video data. For example, the first video information includes one or more of: a first video identifier, a first video address, and a first live room number.

The video playing method according to the present disclosure may be applied to a video playing platform, a live room APP, a video playing APP, and the like. In a possible embodiment, the video playing method is applied to the video playing platform. A user may click a video he wants to watch in a platform interface, to trigger the video playing request. The first video information in the video playing request may be the first video identifier. Based on the first video identifier, the video data corresponding to the first video identifier may be acquired. In another possible embodiment, the video playing method is applied to the live room. When the user clicks on a live streaming interface to select and enter a live room for watching, the first video information in the triggered video playing request may be the live room number of the live room clicked by the user. In another possible embodiment, the video address may be a uniform resource locator (URL) address.

In S12, second video information corresponding to a video preview page is acquired. The video preview page is configured to play video data corresponding to the second video information. For example, the second video information includes one or more of: a second video identifier, a second video address, and a second live room number.

For example, as shown in Figure 2, the video preview page may be a live streaming preview page in the live room APP. The live streaming preview page A may include multiple live room entrances, such as live room A1, A2, and A3. Only one live room entrance is allowed for video preview. For example, if the live room A1 is allowed for video preview, the video data of live room A1 for dynamic preview may be acquired.

In S13, a video is played in the target page based on video playing progress information corresponding to the video preview page and video data loaded on the video preview page, in response to the first video information being the same as the second video information.

Following the above example, as shown in Figure 2, the user may trigger the video playing request through the entrance in the video preview page. For example, the user may trigger the video playing request to enter the live room A1 by clicking on the live room A1. As an example, taking live streaming as an example, the video information in the video playing request is the live room number A1.

In this step, whether the video played on the video preview interface is the same as the video that the user clicks to play may be determined by determining whether the first video information is the same as the second video information. For example, in an embodiment, if the second video information is determined to be the live room number A1, it may be determined that the video played in the video preview interface is the same as the video that the user clicks to play. In this case, the video may be played in the target page based on the video playing progress information of the video preview interface and the video data loaded on the video preview page. The video playing progress information corresponding to the video preview page is acquired when the user triggers the video playing request.

As an example, the video playing progress information may be playing time information. For example, when the user triggers the video playing request, the video playing time in the current video preview page is recorded as the playing time information. When the video is played in the target page, the video data may be controlled to be played from the time indicated by the playing time information, based on the playing time information. Therefore, it can be ensured that the playing progress of the video data played on the target page is continuous with that played on the video preview page.

As another example, the video playing progress information may be a video frame number. For example, when the user triggers the video playing request, the video frame number played on the current video preview page is recorded. When the video data is played on the target page, the video data may be controlled to be played from a video frame corresponding to the video frame number, based on the video frame number.

In the above technical solution, the video playing request is received, and the video playing request includes the first video information. Moreover, the second video information corresponding to the video preview page is acquired. Therefore, when the first video information is the same as the second video information, the video may be played in the target page based on the video playing progress information corresponding to the preview page and the video data loaded on the video preview page. With the above technical solution, when the video played on the video preview page is the same as the video played on the video page to be watched by the user, the video may be played directly based on the video data and the video playing progress information of the video preview page. On the one hand, when being played in the target page, the video may be played directly based on the video data loaded by the video preview interface without re-acquiring the video data. Thus, less communication resource is occupied, and the page response speed and video playing fluency are effectively improved. On the other hand, the video may be played in the target page based on the video playing progress information of the video preview page. Thus, for the same video, the playing progress of the video preview page is consecutive with that of the target page, effectively solving the problem of video discontinuity when switching from the preview page to the play page in the conventional technology, and improving the user experience.

Optionally, before step S 11 of receiving a video playing request, the method may further include: acquiring the second video information of the video preview page.

In the example of the live room, if the video preview page includes multiple live rooms, the second video information is a live room number of the live room where the video is dynamically played in the video preview page. For example, when the video preview page is displayed, the live room where the video is dynamically played and previewed is determined among the live rooms to be displayed, and the second video information corresponding to the determined live room is acquired.

The video data corresponding to the second video information is played on the video preview page, and the video data of the video preview page is stored.

In an embodiment, the video data corresponding to the second video information may be played in the video preview page at a position corresponding to the video data. As shown in Figure 2, if the video data is the data of the live room A1, the video is played in an entrance window of the live room A1. If the video data is the data of the live room A2, the video is played in an entrance window of the live room A2.

In the above technical solution, the video data may be acquired during video preview, to preview the video based on the video data. Moreover, the video data corresponding to the second video information may be stored. Thus the video data may be directly reused during playing of the video in the video playing page, thereby providing data support for fast response and continuous playing on video playing page.

In an embodiment, the video data corresponding to the first video information is stored in a video playing component. The video playing component is a global component, and is initially associated with the video preview page. The video in the video preview page and the video in the target page may both be played with the video playing component. In the embodiment of the present disclosure, the video playing component is the global component. Therefore, the video may be played by associating the video playing component during playing of the video.

In S13, before a video is played on the target page based on the video playing progress information corresponding to the video preview page and the video data loaded on the video preview page in response to the first video information being the same as the second video information, the method may further includes: disassociating the video playing component from the video preview page, and associating the video playing component with the target page.

When a preview video is played based on the video playing component, the video playing component is associated with the video preview page. Since the video playing component is the global component, the video playing component may be associated with multiple pages through switching. That is, multiple pages may share the video playing component by switching the association of multiple pages with the video playing component. Therefore, when the video is played on the target page based on the video playing component, a current association of the video playing component, such as, the association of the video playing component with the video preview page, may be removed. Then, the video playing component may be associated with the target page, to play the video on the target page based on the video playing component.

Correspondingly, the exemplary implementation of playing the video on the target page based on the video playing progress information corresponding to the video preview page and the video data loaded on the video preview page is as follows.

The step may include: playing the video data loaded on the video preview page in the target page, based on the video playing component, the video playing progress information corresponding to the video preview page and the video data loaded on the video preview page.

In this embodiment, the video data corresponding to the video preview page is stored in the video playing component, and the video playing component is associated with the target page by switching the association of the video playing component. In this way, the video may be played in the target page with the video playing component. Therefore, when the video is played on the target page based on the video component, the video may be played directly based on the video data and video playing progress information acquired during preview. Thus, it can be ensured that the videos played in preview page and the target page may be consecutive when the user switches from watching the video on the video preview page to watching the same video on the target page. On the one hand, the stability and smoothness of video playing can be ensured. On the other hand, the response time required for playing the video in the target page can be effectively shorten without re-pulling video data.

Accordingly, the exemplary implementation of playing the video data corresponding to the second video information in the video preview page is as follows. The step may include the following.

In S31, the video data corresponding to the video preview page is acquired based on the second video information. For example, the method may be applied to a video playing component. The video playing component may include a video player and a video view. For example, the video player may be LivePlayer, and the video view may be Texture View. The Texture View may be bound to any parent view. For example, the video data corresponding to the video preview page may be acquired based on the video player and the second video information.

In S32, the video data corresponding to the video preview page is parsed to obtain preview video frames. For example, the video data of the video preview page may be parsed based on the video player to obtain the preview video frames.

For example, the video player may acquire the video data based on a second video information request, and parse the video data to obtain video frame pictures for video playing, that is, video frames. A manner of acquiring and parsing the video data by the video player is the conventional technology, which will not be repeated herein.

In S33, the preview video frames are played in the video preview page. The video frames of the parsed video data may be played through the video view, so that video data is played. The video preview page may be a hypertext markup language (HTML) page, and each node of the page is represented by a tree-like page structure. The live rooms A1, A2, and A3 as shown in Figure 2 are different child nodes under the same parent node, which are all brother nodes. When the preview video frames are played based on the video view in the video preview page, the video view is bound to the respective node in the tree-like page structure to play the video at a position of the node in the video preview page. If the video view is bound to the node corresponding to A1, the video may be played at the position corresponding to A1 in Figure 2. Therefore, the preview video may be played in the video preview page, which facilitates subsequent continuous playing of the video data in the target page, and improves the reusability of the video data. In addition, the data may be acquired and parsed with the video player in the video playing component based on the video address, so that the video is played based on the position of the video view in the page. In this way, the video playing efficiency and the reusability of the video playing component are ensured, so as to improve the stability and smoothness of video playing.

In an embodiment, the method may further include: in the case that the first video information is different from the second video information, acquiring video data corresponding to the first video information.

If the first video information is different from the second video information, it means that the video previewed previously is different from the video to be played in response to the video playing request. That is, the currently requested video is not the video currently previewed. In this case, the video data corresponding to the first video information may be acquired based on the first video information. For example, a request may be sent to a server to pull the video data.

The video data corresponding to the first video information is played on the target page. The specific embodiment of playing the video data after the video data is acquired is similar to the method of playing the preview video described above, which will not be repeated herein.

In the above technical solution, if the first video information is different from the second video information, the video data corresponding to the first video information is acquired based on the first video information to realize video playing, thereby ensuring the accuracy and stability of video playing and meeting the user requirements for video playing.

In an embodiment, the video data corresponding to the second video information is deleted when a process for video playing is exited.

The process for video playing is created when the video playing platform, the video playing APP or the live streaming APP software are opened, and ends when the platform or APP is exited in the background. Therefore, in this embodiment, taking the live streaming APP as an example, when the user returns to a terminal desktop from the video preview page by misoperation, the APP is still running on the background. In this case, the video data corresponding to the second video information is retained when the user re-enters the video preview page. That is, the video data corresponding to the video preview interface is not deleted. If the user chooses to enter the live room A1, the video may be played on the target page in the live room A1 based on the stored video data of the video preview page, thereby effectively avoiding the impact of user's misoperation on video playing, and further improving the user experience.

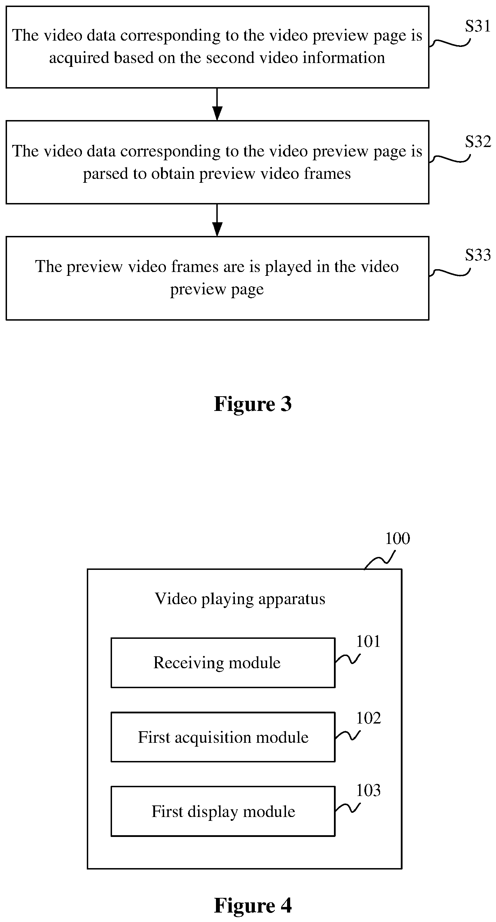

A video playing apparatus is provided according to the present disclosure. As shown in Figure 4, the apparatus 100 includes a receiving module 101, a first acquisition module 102, and a first playing module 103.

The receiving module 101 is configured to receive a video playing request, where the video playing request includes first video information, and the video playing request indicates to play video data corresponding to the first video information through a target page.

The first acquisition module 102 is configured to acquire second video information corresponding to a video preview page, where the video preview page is used to play video data corresponding to the second video information.

The first playing module 103 is configured to play a video in the target page based on video playing progress information corresponding to the video preview page and video data loaded on the video preview page, in response to the first video information being the same as the second video information.

In an embodiment, the apparatus 100 further includes a second acquisition module and a second playing module.

The second acquisition module is configured to acquire the second video information corresponding to the video preview page before the receiving module receives the video playing request.

The second playing module is configured to play the video data corresponding to the second video information on the video preview page, and store the video data corresponding to the video preview page.

In an embodiment, the second playing module includes an acquisition sub-module, a parsing sub-module, and a playing sub-module.

The acquisition sub-module is configured to acquire the video data corresponding to the video preview page based on the second video information.

The parsing sub-module is configured to parse the video data corresponding to the video preview page to obtain preview video frames.

The playing sub-module is configured to play the preview video frames on the video preview page.

In an embodiment, the video data corresponding to the first video information is stored in a video playing component. The video playing component is a global component, and is initially associated with the video preview page.

The apparatus further includes an association module configured to disassociate the video playing component with the video preview page and associate the video playing component with the target page, before the first playing module playing the video on the target page based on video playing progress information corresponding to the video preview page and video data loaded on the video preview page in response to the first video information being the same as the second video information.

The first playing module is configured to play the video data loaded on the video preview page in the target page, based on the video playing component, the video playing progress information corresponding to the video preview page and the video data loaded on the video preview page.

In an embodiment, the apparatus further includes a third acquisition module and a third playing module.

The third acquisition module is configured to acquire the video data corresponding to the first video information, in response to the first video information different from the second video information.

The third playing module is configured to play the video data corresponding to the first video information on the target page.

In an embodiment, the apparatus further includes a deletion module configured to delete the video data corresponding to the second video information, when a video playing process exited.

In an embodiment, the first video information includes one or more of a first video identifier, a first video address, and a first live room number.

The second video information includes one or more of a second video identifier, a second video address, and a second live room number.

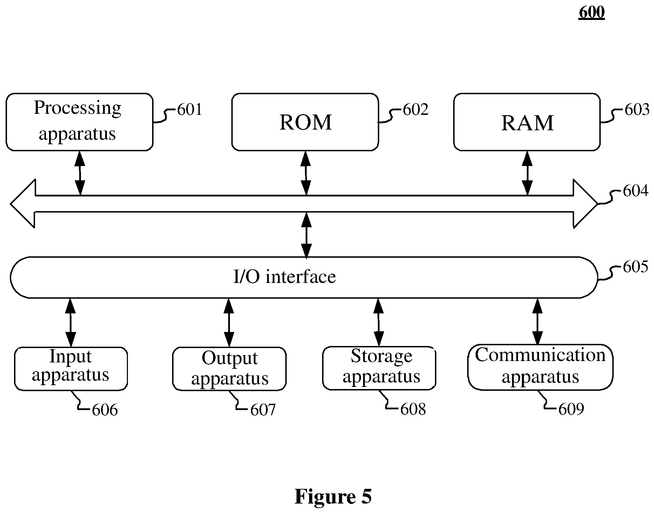

Reference is made to Figure 5, which shows a schematic structural diagram of an electronic device 600 suitable for implementing the embodiments of the present disclosure. The terminal device according to the embodiments of the present disclosure may include, but are not limited to, a mobile phone, a laptop, a digital broadcast receiver, a personal digital assistants (PDA), a portable android device (PAD), a portable media player (PMP), a vehicle-mounted terminal (such as an in-vehicle navigation terminal) and other mobile terminals and fixed terminals such as a digital television (DTV), a desktop computers. The electronic device shown in Figure 5 is only exemplary, and should not indicate any limitation to the function and application scope of the embodiments of the present disclosure.

As shown in Figure 5, the electronic device 600 may include a processing apparatus (such as a Central Processor or a Graphics Processor) 601, which may execute various appropriate actions and processing through a program stored in a read-only memory (ROM) 602 or a program loaded from a storage apparatus 608 into a random access memory (RAM) 603. Various programs and data are stored in the RAM 603, which are required by the electronic device 600 to perform an operation. The processing apparatus 601, the ROM 602 and the RAM 603 are connected to each other through a bus 604. An Input/output (I/O) interface 605 is also connected to the bus 604.

Generally, the I/O interface 605 may be connected to: an input apparatus 606, such as a touch screen, a touch panel, a keyboard, a mouse, a camera, a microphone, an accelerometer, and a gyroscope; an output apparatus 607, such as a liquid crystal display (LCD), a speaker, and a vibrator; a storage apparatus 608 such as a magnetic tape and a hard disk; and a communication apparatus 609. The communication apparatus 609 enables wireless or wired communication between the electronic device 600 and other devices for data exchanging. Although Figure 5 shows an electronic device 600 having various components, it should be understood that the illustrated components are not necessarily required to all be implemented or embodied. Alternatively, more or fewer apparatuses may be implemented or included.

Particularly, according to the embodiments of the present disclosure, the process described above in conjunction with flowcharts may be implemented as a computer software program. For example, a computer program product is further provided as an embodiment in the present disclosure, including a computer program carried on a non-transitory computer readable medium. The computer program includes program code for performing the method shown in the flowchart. In the embodiment, the computer program may be downloaded and installed from the network via the communication apparatus 609, or installed from the storage apparatus 608, or installed from the ROM 602. When the computer program is executed by the processing apparatus 601, the functions defined in the method according to the embodiment of the present disclosure are performed.

It should be noted that, the computer readable medium mentioned in the present disclosure may be a computer readable signal medium or a computer readable storage medium or any combination thereof. The computer readable storage medium may be but is not limited to, a system, an apparatus, or a device in an electronic, magnetic, optical, electromagnetic, infrared, or semi-conductive form, or any combination thereof. More specific examples of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a portable compact disk read-only memory (CD-ROM), an optical storage device, a magnetic storage device, or any appropriate combination thereof. In the embodiment of the present disclosure, the computer readable storage medium may be any tangible medium containing or storing a program, and the program may be used by or in combination with an instruction execution system, apparatus, or device. In the present disclosure, the computer readable signal medium may be a data signal transmitted in a baseband or transmitted as a part of a carrier wave and carrying computer readable program codes. The transmitted data signal may be in various forms, including but not limited to an electromagnetic signal, an optical signal or any proper combination thereof. The computer readable signal medium may be any computer readable medium other than the computer readable storage medium, and can send, propagate or transmit programs to be used by or in combination with an instruction execution system, apparatus or device. The program codes stored in the computer readable medium may be transmitted via any proper medium including, but not limited to, an electrical wire, an optical cable, radio frequency (RF) and the like, or any proper combination thereof.

In some embodiments, client devices and servers may communicate using any of currently known network protocol, such as hypertext transfer protocol (HTTP) or future developed network protocol, and may communicate and be interconnected with digital data in any form or medium (e.g., communication network). Examples of a communication network include a local area network (LAN), a wide area network (WAN), the Internet (e.g., the Internet), and an end-to-end network (e.g., ad hoc end-to-end network) or any of a currently known or a future developed network.

The computer readable medium may be incorporated in the electronic device, or may exist alone without being assembled into the electronic device.

The computer-readable medium carries one or more programs. The above one or more programs, when executed by the electronic device, cause the electronic device to: receive a video playing request, where the video playing request includes first video information, and the video playing request indicates to play video data corresponding to the first video information through a target page; acquire second video information corresponding to a video preview page, where the video preview page is used to play video data corresponding to the second video information; play the video data corresponding to the first video information in the target page based on video playing progress information corresponding to the video preview page, in response to the first video information being the same as the second video information.

The computer program codes for performing the operations disclosed in the embodiments of the present disclosure may be written in one or more programming languages or combinations thereof. The programming languages include, but not limit to an object-oriented programming language, such as Java, Smalltalk, and C++, and a conventional procedural programming language, such as C language or a similar programming language. The program codes may be executed entirely on a user computer, partially on the user computer, as a standalone software package, partially on the user computer and partially on a remote computer, or entirely on the remote computer or a server. In a case involving a remote computer, the remote computer may be connected to a user computer or an external computer through any kind of network including a Local Area Network (LAN) or a Wide Area Network (WAN). For example, the remote computer may be connected to the external computer through an Internet connection supported by an Internet service provider.

Flowcharts and block diagrams in the drawings illustrate the architecture, functions and operations that can be implemented by a system, a method and a computer program produce according to various embodiments of the present disclosure. In this regard, each block in the flowchart or the block diagram may represent a module, a program segment, or a part of code. The module, the program segment, or the part of code includes one or more executable instructions used for implementing specified logic functions. It should be noted that, in some alternative implementations, the functions marked in blocks may be performed in an order different from the order shown in the drawings. For example, two blocks shown in succession may actually be executed in parallel, or sometimes may be executed in a reverse order, which depends on the functions involved. It should also be noted that each of the block in the block diagram and/or flowchart and a combination of the blocks in the block diagram and/or flowchart may be implemented by a dedicated hardware-based system that performs specified functions or actions, or may be realized by a combination of dedicated hardware and computer instructions.

The modules mentioned in the embodiments of the present disclosure may be implemented by means of software, or otherwise by means of hardware. In particular, the name of the module does not constitute a limitation on the module itself in some cases. For example, the receiving module may also be described as "a module for receiving a video playing request".

The functions described herein above may be performed, at least in part, by one or more hardware logic components. For example, without limitation, the exemplary hardware logic components that may be used include: a field programmable gate array (FPGA), an application specific integrated circuit (ASIC), an application specific standard parts (ASSP), a system on a chip SOC), a complex programmable logic device (CPLD) and so on:

In the context of the present disclosure, the machine readable medium may be a tangible medium that may contain or store a program, and the program may be used by or in connection with an instruction execution system, apparatus or device. The machine readable medium may be a machine readable signal medium or a machine readable storage medium. The computer readable medium may include, but is not limited to, system, an apparatus, or a device in an electronic, magnetic, optical, electromagnetic, infrared, or semi-conductive form, or any suitable combination thereof. The machine readable storage medium may include an electrical connection based on one or more wires, a portable computer disk, a hard disk, a Random Access Memory (RAM), a Read Only Memory (ROM), an Erasable Programmable Read Only Memory (EPROM or flash memory), an optical fiber, a portable compact disc read only memory (CD-ROM), a light storage device, a magnetic storage device or any proper combination thereof.

According to one or more embodiments of the present disclosure, a video playing method is provided according to a first example. The method includes:
receiving a video playing request, where the video playing request includes first video information, and the video playing request indicates to play video data corresponding to the first video information through a target page;
acquiring second video information corresponding to a video preview page, where the video preview page is used to play video data corresponding to the second video information; and
playing the video data corresponding to the first video information in the target page based on video playing progress information corresponding to the video preview page and video data loaded on the video preview page, in response to the first video information being the same as the second video information.

According to one or more embodiments of the present disclosure, the method of the first example is provided according to a second example. Before the receiving a video playing request, the method further includes:
acquiring the second video information corresponding to the video preview page; and
playing the video data corresponding to the second video information in the video preview page, and storing the video data corresponding to the video preview page.

According to one or more embodiments of the present disclosure, the method of the second example is provided according to a third example. In the method, the playing the video data corresponding to the second video information in the video preview page, includes:
acquiring the video data corresponding to the video preview page based on the second video information;
parsing the video data corresponding to the video preview page to obtain preview video frames; and
playing the preview video frames in the video preview page.

According to one or more embodiments of the present disclosure, the method of the second example is provided in a fourth example. In the method, the video data corresponding to the first video information is stored in a video playing component, the video playing component is a global component, and the video playing component is initially associated with the video preview page.

Before playing a video in the target page based on video playing progress information corresponding to the video preview page and video data loaded on the video preview page in response to the first video information being the same as the second video information, the method further includes:
disassociating the video playing component with the video preview page, and associating the video playing component with the target page.

The playing a video in the target page based on video playing progress information corresponding to the video preview page and video data loaded on the video preview page, includes:
playing the video data loaded on the video preview page in the target page based on the video playing component, the video playing progress information corresponding to the video preview page and the video data loaded on the video preview page.

According to one or more embodiments of the present disclosure, the method of the first example is provided according to a fifth example. The method further includes:
acquiring the video data corresponding to the first video information, in response to the first video information different from the second video information; and
playing the video data corresponding to the first video information in the target page.

According to one or more embodiments of the present disclosure, the method of any one of the first to fifth examples is provided in a sixth example. The method further includes:
deleting the video data corresponding to the second video information when a process of playing the video is exited.

According to one or more embodiments of the present disclosure, the method of any one of the first to fifth examples is provided in a seventh example. In the method, the first video information includes one or more of a first video identifier, a first video address, and a first live room number.

The second video information includes one or more of a second video identifier, a second video address, and a second live room number.

According to one or more embodiments of the present disclosure, a video playing apparatus is provided in an eighth example. The apparatus includes:
a receiving module configured to receive a video playing request, where the video playing request includes first video information, and the video playing request indicates to play video data corresponding to the first video information through a target page;
a first acquisition module configured to acquire second video information corresponding to a video preview page, where the video preview page is used to play video data corresponding to the second video information; and
a first playing module configured to: play a video in the target page based on video playing progress information corresponding to the video preview page and video data loaded on the video preview page, in response to the first video information being the same as the second video information.

According to one or more embodiments of the present disclosure, a computer readable medium storing a computer program is provided in a ninth example. The program, when executed by a processing apparatus, causes the processing apparatus to perform steps of the method according to any one of the first to seventh examples.

According to one or more embodiments of the present disclosure, an electronic device is provided in a tenth example. The electronic device includes:
a storage apparatus storing a computer program, and
a processing apparatus configured to execute the computer program stored in the storage apparatus to perform steps of the method according to any one of the first to seventh examples.

The above description includes merely preferred embodiments of the present disclosure and explanations of technical principles used. Those skilled in the art should understand that the scope of the present disclosure is not limited to the technical solution formed by combination of the technical features described above, but also covers other technical solutions formed by any combination of the above technical features or the equivalent features of the technical features without departing from the concept of the present disclosure. For example, a technical solution formed by interchanging the above features and technical features having similar functions as disclosed, but not limited to, in the present disclosure with each other is also covered with the scope of the present disclosure.

It should be noted that although the above operations are described in a specific order, it should not be understood that these operations are required to be performed in the specific order or performed in a sequential order. Under certain circumstances, multitasking and parallel processing may be advantageous. Although multiple implementation details are included in the above descriptions, the details should not be interpreted as limitations to the scope of the present disclosure. The features described in multiple separate embodiments may be implemented in combination in a separate embodiment. Conversely, the features described in a separate embodiment may be implemented in multiple embodiments individually or in any suitable sub-combination.

Although the subject matter has been described in language specific to structural features and/or logical actions of the method, it should be understood that the subject matter defined in the appended claims are unnecessarily limited to the specific features or actions described above. The specific features and actions described above are merely exemplary forms of implementing the claims. For the apparatus according to the embodiments described above, the manners in which the modules perform operations have been described in detail in the embodiments of the method, which are not described in detail herein.

## Claims

1. A video playing method, comprising:
receiving a video playing request, wherein the video playing request comprises first video information, and the video playing request indicates to play video data corresponding to the first video information through a target page;
acquiring second video information corresponding to a video preview page, wherein the video preview page is used to play video data corresponding to the second video information; and
playing a video in the target page based on video playing progress information of the video preview page and video data loaded on the video preview page, in a case that the first video information is the same as the second video information.

2. The method according to claim 1, wherein before the receiving a video playing request, the method further comprises:
acquiring the second video information corresponding to the video preview page; and
playing the video data corresponding to the second video information in the video preview page, and storing the video data corresponding to the video preview page.

3. The method according to claim 2, wherein the playing the video data corresponding to the second video information in the video preview page, comprises:
acquiring the video data corresponding to the video preview page based on the second video information;
parsing the video data corresponding to the video preview page to obtain preview video frames; and
playing the preview video frames in the video preview page.

4. The method according to claim 2, wherein the video data corresponding to the first video information is stored in a video playing component, the video playing component is a global component, and the video playing component is initially associated with the video preview page;
before playing a video in the target page based on video playing progress information of the video preview page and video data loaded on the video preview page in response to the first video information being the same as the second video information, the method further comprises:
disassociating the video playing component with the video preview page, and associating the video playing component with the target page; and
the playing a video in the target page based on video playing progress information corresponding to the video preview page and video data loaded on the video preview page, comprises:
playing the video data loaded on the video preview page in the target page based on the video playing component, the video playing progress information corresponding to the video preview page and the video data loaded on the video preview page.

5. The method according to claim 1, further comprising:
acquiring the video data corresponding to the first video information, in response to the first video information different from the second video information; and
playing the video data corresponding to the first video information in the target page.

6. The method according to any one of claims 1 to 5, further comprising:
deleting the video data corresponding to the second video information when a process of playing the video is exited.

7. The method according to any one of claims 1 to 5, wherein the first video information comprises one or more of a first video identifier, a first video address, and a first live room number; and
the second video information comprises one or more of a second video identifier, a second video address, and a second live room number.

8. A video playing apparatus, comprising:
a receiving module configured to receive a video playing request, wherein the video playing request comprises first video information, and the video playing request indicates to play video data corresponding to the first video information through a target page;
a first acquisition module configured to acquire second video information corresponding to a video preview page, wherein the video preview page is used to play video data corresponding to the second video information;
a first playing module configured to play a video in the target page based on video playing progress information corresponding to the video preview page and video data loaded on the video preview page, in a case that the first video information is the same as the second video information.

9. A computer readable medium storing a computer program, wherein the computer program, when executed by a processing apparatus, causes the processing apparatus to perform steps of the method according to any one of claims 1 to 7.

10. An electronic device, comprising:
a storage apparatus storing a computer program, and
a processing apparatus configured to execute the computer program stored in the storage apparatus to perform steps of the method according to any one of claims 1 to 7.
